# EUROPEAN PATENT SPECIFICATION

(11) **EP 4 626 731 B1**
(45) Date of publication and mention of the grant of the patent: **19.08.2026**
(21) Application number: 23804738.5
(22) Date of filing: 27.10.2023
(51) Int. Cl.: B60K 7/00

(54) **HUB POWERTRAIN**
NABENANTRIEBSSTRANG
ENSEMBLE MOTOPROPULSEUR DE MOYEU

(30) Priority: 29.11.2022 GB 202217945
(43) Date of publication of application: 08.10.2025
(73) Proprietor: OXDRIVE LIMITED, Towcester NN12 8GX (GB)
(72) Inventor: GOAD, Terence, Towcester NN12 8GX (GB)
(74) Representative: The IP Asset Partnership Limited
(86) International application number: PCT/GB2023/052818
(87) International publication number: WO 2024/115871

(56) References cited:
- WO-A1-2007/036333
- WO-A1-2010/101914
- CN-A- 112 277 623
- DE-A1- 102014 207 551
- US-A1- 2020 393 012
- US-A1- 2021 094 406

## Description

### Field

The present invention relates to electrically powered vehicle powertrains. In particular, the present invention relates to unitary, electric, hub powertrains and more particularly still to said hub powertrains for extreme environments.

### Background

Electric powertrains must all address the two conflicting issues of having to exclude water from the electrical circuitry which requires sealing to prevent short circuit, whilst simultaneously managing the thermal state of components of the powertrain. Most applications simplify these challenges by mounting the major components including the electric motor and motor controller separately within the vehicle structure.

Heat management systems often require components to be surrounded by a heat transfer fluid to remove heat from said components. Thermal management issues are compounded, when major components are located together, by the different running temperatures of the various components. In particular the motor controller runs at a 50°C-90°C whereas an electric motor can run at >100°C or >120°C when under load. It is preferable to have the motor controller located close to the motor as there are many electric cables running from the motor controller to the motor. These cables carry high current and therefore must be thick making them heavy, inflexible and expensive.

Powertrains designed for extreme or hostile environments that are exposed to mud, water and may even be submerged, sealing of the components becomes even more important. It is common practice for such components to be IP67 rated or higher. Thus ventilation through components becomes impossible to achieve. Dirt and or mud which may become caked on to exposed driveline components can also further insulate components making heat dissipation more challenging still. In such applications the additional problem of protecting the fragile electrical components must be addressed. This is often achieved by locating the electrical components of the powertrain within the vehicle structure. These challenges are often also combined with a requirement for increased ground clearance to clear crops or traverse rough ground which also brings the need for increased wheel articulation, both in suspension travel to improve stability and traction and in steering rotation to improve manoeuvrability, that make mounting electrical components in a remote location and transmitting drive to the wheel challenging. US 2020 393012 A1 provides an example of a unitary electrically driven hub.

### Summary of Invention

The present invention seeks to provide an integrated, electric motor and motor controller within a compact, unitary, sealed hub drive requiring only power and control lines reducing the number of connections required compared to discrete arrangements. Thereby creating a sealed protected environment for said components whilst addressing the aforementioned challenges with heat management presented by such a solution and freeing the manufacture from the packaging constraints of conventional drivelines.

According to the invention, there is provided a unitary electrically driven hub having an inboard end, an outboard end and a central axis X comprising:
a circumferentially extending body including a first mounting means for connecting the hub to the chassis of a vehicle at the inboard end, a hub rotor rotatably mounted to the body and including a second mounting means for attaching a road wheel at the outboard end, an electric motor mounted to the body, a drive means for connecting the electric motor to the hub rotor, a motor controller electrically connected to and for driving the electric motor and connectable to a source of electrical energy, a thermally conductive motor controller mounting plate thermally connected to the motor controller for transferring thermal energy away from the motor controller, wherein the motor controller mounting plate has a thermal conductivity value greater than or equal to that of the body and when installed is sandwiched between the first mounting means and the chassis for conduction of thermal energy thereto. The unitary hub drive provides an easily packaged modular drive solution for a vehicle. Direct drive of the wheel from the hub reduces drivetrain losses and components requiring maintenance. The motor controller located within the hub reduces the length of the cables required between the motor controller and the electric motor reducing transmission losses and reduces the number of cables connected to the hub easing packaging. The motor controller plate as specifically the motor controller plate having a thermal conductivity value greater than or equal to the body ensures the motor controller is maintained at its optimal operating temperature that is different to other components located within the hub in particular the motor controller may have an operating temperature lower than the electric motor also located within the hub.

Optionally, the hub includes one or more seals for fluidly sealing the hub and wherein the motor controller and electric motor are mounted within the hub .

The unitary design improves sealing and seals protect the electrical components within the hub by preventing fluid and other foreign matter ingress. The hub requires only power lines and a control line connections reducing the number of apertures required in the design, further aiding sealing.

Optionally, including a thermal baffle located between the motor controller and the electric motor; optionally the thermal baffle including a thermal protection layer comprising a reflective layer, a thermally insulating layer and/or a thermally conductive layer. The thermal baffle improving thermal isolation of the motor controller from the heat generated by the motor and other heat generating components within the hub.

Optionally, the thermal baffle is thermally connected to the controller mounting plate. Advantageously, any heat absorbed by the thermal baffle is conducted away from the motor controller rather than being radiated toward the motor controller.

Optionally, the hub rotor is manufactured from a thermally conductive material.

Advantageously, heat generated by the bearings and gearbox if included is conducted to the wheel and away from the body and therefore away from the motor controller and the motor.

Optionally, further comprising a brake for restricting rotation of the hub rotor. Advantageously allowing the hub to slow the vehicle and or hold the vehicle stationary and further improving the packaging benefits for the vehicle.

Optionally, further including a heat transfer augmentation means for improving heat transfer. Further optionally, the heat transfer augmentation means comprises, thermal compound one or more heat pipes, a heat transfer fluid contained within the body.

Optionally, the thermal baffle includes an Electromagnetic Compatibility (EMC) screen for protecting the motor controller from any electromagnetic noise created by the motor.

Optionally, the motor controller mounting plate includes an inner face on which the motor controller is mounted and an outer face wherein the outer face includes a heat transfer surface for conducting heat to the chassis of the vehicle.

Optionally, the heat transfer surface is bare metal, is coloured black and/or matt in finish and/or includes a heat transfer compound to improve heat transfer.

Optionally, the mounting means has a mounting face in thermal contact with the motor controller mounting plate for conducting heat from the electric motor and the mounting face has a smaller surface area than the heat transfer surface of the motor controller mounting plate. Advantageously, ensuring the flow of thermal energy from the motor controller mounting plate to the chassis and controlling the rate of thermal energy transfer from the body to the motor controller mounting plate to prevent the body from heating the motor controller mounting plate.

Optionally, the outer face further includes cooling fins. Advantageously, further cooling the motor controller.

Optionally, the electric motor is a radial flux electric motor having coils located radially outboard adjacent the housing for conduction of thermal energy thereto. Advantageously, improving thermal transfer from the electric motor to the body as the coils and the metal core of the stator about which the coils are wound are the main source of heat generated by the electric motor.

Optionally, further comprising a circumferentially extending motor heat conductor thermally connected to the electric motor and in use sandwiched between the body and the chassis.

Optionally, wherein the motor controller mounting plate has a thermal conductivity => 88 watts/m/DegK. The motor controller mounting plate is made from a thermally conductive material to improve transmission of thermal energy from the motor controller. In further preferred embodiments the motor controller mounting plate has a coefficient of thermal conductivity >100 watts/m/DegK or further preferably >150 watts/m/DegK and/or the body has a coefficient of thermal conductivity <80 watts/m/DegK. Thereby providing the thermal flow path T.

Optionally, the drive means including a gearbox located at the outboard end, and a drive shaft connecting said gearbox to the electric motor. The gearbox generates heat, locating the gearbox at the opposite end to the motor controller allows this heat to be dissipated away from the motor controller.

Optionally, the gearbox is enclosed within a thermally conductive housing mounted to and rotatable with the hub rotor. The thermally conductive housing improves the rate of thermal transfer of the heat generated by the gearbox and bearings to the wheel thereby dissipating heat faster and reducing the exposure of the motor controller to high temperatures. Optionally, the thermally conductive housing further comprises a mounting flange located, in use, between the wheel and the hub rotor for conducting heat from the gearbox to the wheel. Optionally, the brake comprises a park brake.

Optionally, a conductive material is aluminium, magnesium, silver, gold or copper. Optionally, the body is made from iron or steel.

Optionally, a vehicle is provided including the hub described herein.

### Brief Description of Drawings

Embodiments will now be described, by way of example only and with reference to the accompanying drawings having like-reference numerals, in which:
Figure 1 shows a section view through the axis of rotation of a unitary electrically driven hub according to the current invention;
Figure 2 shows a section view through the axis of rotation of a unitary electrically driven hub according to the current invention further including an electric motor heat conductor;
Figure 3 shows a section view through the axis of rotation of a unitary electrically driven hub according to the current invention with an integrated electric motor and motor controller thermal conduction pathway;
Figure 4 shows a section view through the axis of rotation of a unitary electrically driven hub according to the current invention where the body of the hub comprises the stator of the electric motor; and
Figure 5 shows the thermal pathways protecting the electrical components.

### Specific Description

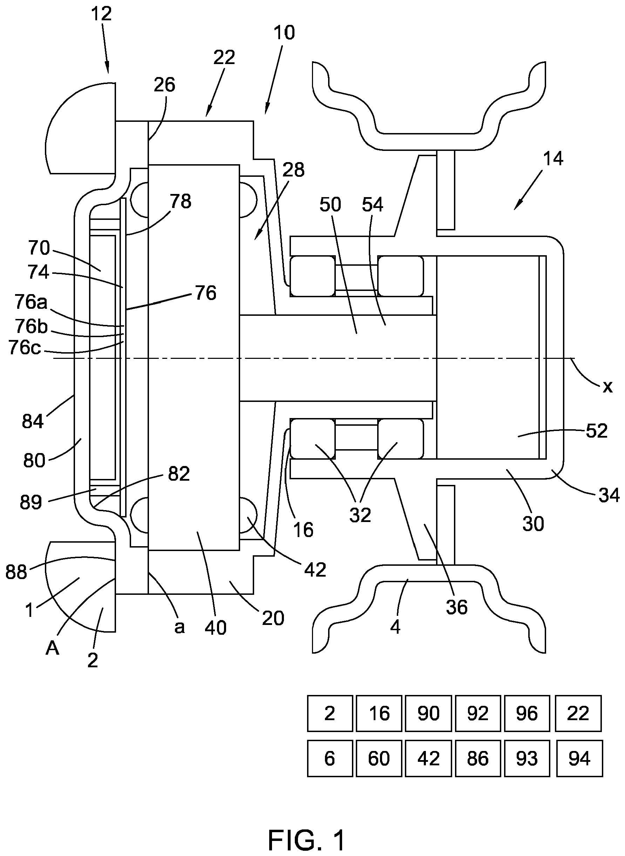

Referring to Figure 1, a first embodiment will now be described.

Figure 1 shows a unitary electrically driven hub 10. The hub 10 has an inboard end 12 including a first mounting means 22 connectable to the chassis 1 of a vehicle 2 and an outboard end 14 including hub rotor 30 connectable to a road wheel 4 of said vehicle 2. A unitary electrically driven hub 10 further comprises an electric motor 40, a motor controller 70 for controlling the electric motor 40. The motor 40 is connected to said hub rotor 30 by a drive means 50. The electric motor 40 is connectable to a source of electrical energy 6 for example by an electrical cable 7. The hub 10 has a central axis X about which the hub rotor 30 is rotatable when driven by the electric motor 40 to provide motive drive to the road wheel 4. The hub rotor 30 is the driven rotation portion of the hub 10 connectable to the road wheel 4 for supporting and propelling the vehicle 2. The hub 10 includes a circumferentially extending body 20 connected to the motor 40 and defining a cavity 28 therein. The body 20 is rotatably connected to the hub rotor 30 via one or more bearings 32. The hub 10 may further include a brake 60 for restricting rotation of the hub rotor 30.

The hub 10 also includes a motor controller mounting plate 80 on which the motor controller 70 is mounted such that the motor controller 70 is thermally connected with the motor controller mounting plate 80. The motor controller 70 and the motor controller mounting plate 80 are located at the inboard end 12. The motor controller mounting plate 80 is a sandwich plate located between the chassis 1 of the vehicle 2 and the body 20 when the hub 10 is installed on a vehicle 1, therefore, the mounting plate 80 does not need to fulfil any structural function other than holding the motor controller 70. Specifically, the motor controller mounting plate 80 is sandwiched between the chassis 1 and a mounting face 26 of the body 20. The body 20 is thermally connected to the chassis 1 via the motor controller mounting plate 80. The motor controller mounting plate 80 also includes a heat transfer surface 88 in thermal contact with the chassis 1 for passing thermal energy thereto. The motor controller mounting plate 80 has an inner face 82 facing the cavity 28 and an outer face 84. The motor controller 70 is mounted to the inner face 82 and therefore accommodated within the cavity 28. The outer face 84 may also include cooling fins 86 exposed to air or fluid passing the outer surface 84 for removing further thermal energy from the motor controller 70. The inner face 82 may also include cooling fins 86 to improve surface area for heat transfer. The motor controller mounting plate 80 has a high coefficient of thermal conductivity and is for transferring heat away from the motor controller 70. The motor controller mounting plate 80 has a value of thermal conductivity greater than or equal to that of the body 20 and is preferably made of a thermally conductive material. Preferably, the motor controller mounting pate 80 has a value of thermal conductivity greater than the body 20. Therefore, the thermal energy generated by the motor 40 and the motor controller 70 is conducted into the chassis 1 which acts to receive thermal energy from the hub 10. The chassis 1 has a greater thermal mass than the hub 10 and in particular the body 20 and the motor controller mounting plate 80 by virtue of the chassis' greater volume and/or greater capacity to dissipate heat. Therefore, the chassis 1 acts as a heat sink for the hub 10.

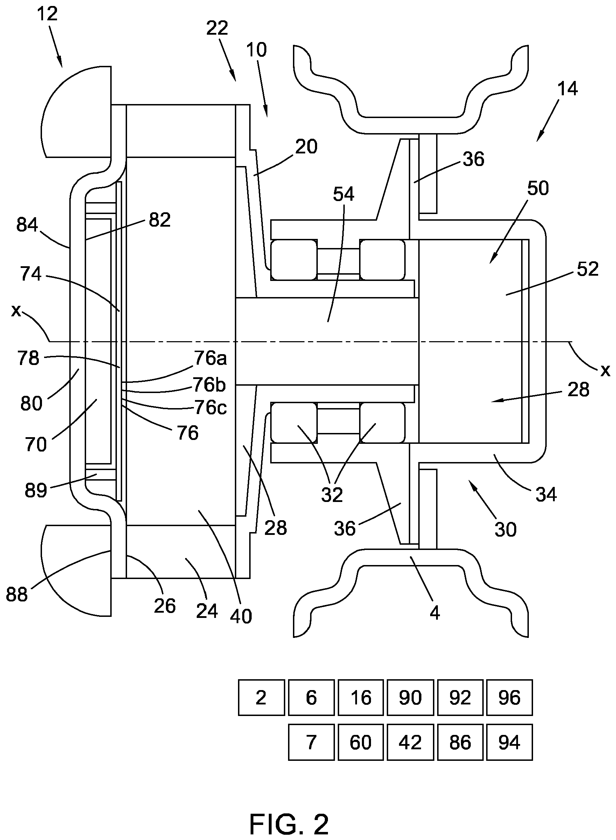

The hub rotor 30 includes a second mounting means 36 that may comprise a mounting flange 36 for connecting the hub rotor 30 to the road wheel 4. The hub rotor 30 is thermally connected with the road wheel 4 for transferring heat thereto. The hub rotor 30 may be manufactured from a thermally conductive material in order to conduct heat away from the gearbox 52, bearings 32 and/or the electric motor 40. The hub rotor 30 may include a thermally conductive housing 34 for aiding transfer of heat from the drive means 50 in particular if the drive means 50 includes a gearbox 52 to the road wheel 4. The thermally conductive housing 34 is preferably made from a thermally conductive material. The thermally conductive housing 34 may comprise the entire hub rotor 30 including the second mounting means 36 or may be separate to the hub rotor 30 and sandwiched between the hub rotor 30 and the wheel 4 as shown in figure 2 for transferring thermal energy to the road wheel 4. In the case the thermally conductive housing 34 is separate from the remainder of the hub rotor 30 it is preferable that the coefficient of conductivity of the thermally conductive housing 34 is greater than or equal to that of the remainder of the hub rotor 30 and further preferably that the thermally conductive housing 34 has a coefficient of thermal conductivity greater than that of the remainder of the hub rotor 34. Thus heat from the gearbox 50 is preferentially conducted into the road wheel 4 or other driven component and heat generated is kept away from the motor controller 70.

A thermal baffle 74 is also shown located between the electric motor 40 and the motor controller 80. The thermal baffle extends across the cavity 28 for preventing radiated heat from the electric motor 40 or warmed air or fluid within the cavity 28 from transferring heat from the electric motor 40 to the motor controller 70. The thermal baffle 74 includes a thermal protection layer 76 which may include a reflective layer 76a an insulating layer 76b for preventing heat transmission to the motor controller 70 and/or a thermally conductive layer 76c for conducting heat away from the motor controller 70 to the end plate 80 and may further include a seal 76d to prevent movement of heated air from reaching the motor controller 70. The thermal baffle 74 may further include an electromagnetic compatibility (EMC) screen to prevent electromagnetic interference or noise from the electric motor 40 from negatively affecting the motor controller 70. The thermal baffle 74 may be located by one or more baffle mountings 89. In figure 1 these mountings extend from the inner face 82 of the of the motor controller mounting place 80. It is beneficial that the baffle mountings 89 are insulated baffle mountings 89 with a low coefficient of heat transfer.

The cavity 28 is the volume within the hub 10 and bounded by the body 20, the motor controller mounting plate 80 and the hub rotor 30. The cavity 28 is sealed for excluding moisture and foreign matter from the said cavity 28 of the hub 10 in order to protect the motor controller 70, the electric motor 40, the gearbox 52 and/or the bearings 32. Accordingly, the hub 10 may include one or more seals 16 for excluding said moisture, fluid and/or foreign matter; for example seals 16 may be included at the points electrical supply and control wires enter the hub 10 and comprising part of the one or more bearings 32 connecting the hub rotor 30 to the body 20. The body 20 provides structural support for the one or more bearings 32 and in turn the hub rotor 30 and transmits the load on the road wheel 4 via the hub rotor 30 and the bearings 32 to the chassis 1 of the vehicle 2.

The skilled person will understand that road wheel 4 is given as an example as an example of an item that may be driven by the hub 10. Road wheel 4 can include a track drive wheel, a winch or any item driven by the hub 10. The chassis 1 of the vehicle 2 can include suspension components such as an upright or an axle or the hub drive may be installed to drive an alternative component such as a winch.

Figure 2 shows a second embodiment with the same features as the first embodiment of figure 1 and the addition of an electric motor heat conductor 24 thermally connected with the motor 40 for receiving heat therefrom and preferably made of a thermally conductive material. The electric motor heat conductor 24 extends circumferentially about the motor 40 and is thermally connected to the body 20 and located between the body 20 and the chassis 1, preferably sandwiched between the chassis 1 and the body 20 along with the motor controller mounting plate 80. Therefore, the electric motor heat conductor 24 may be sandwiched between the body 20 and the motor controller mounting plate 80.

Figure 2 also includes a hub rotor 30 comprising a separate thermally conductive housing 34

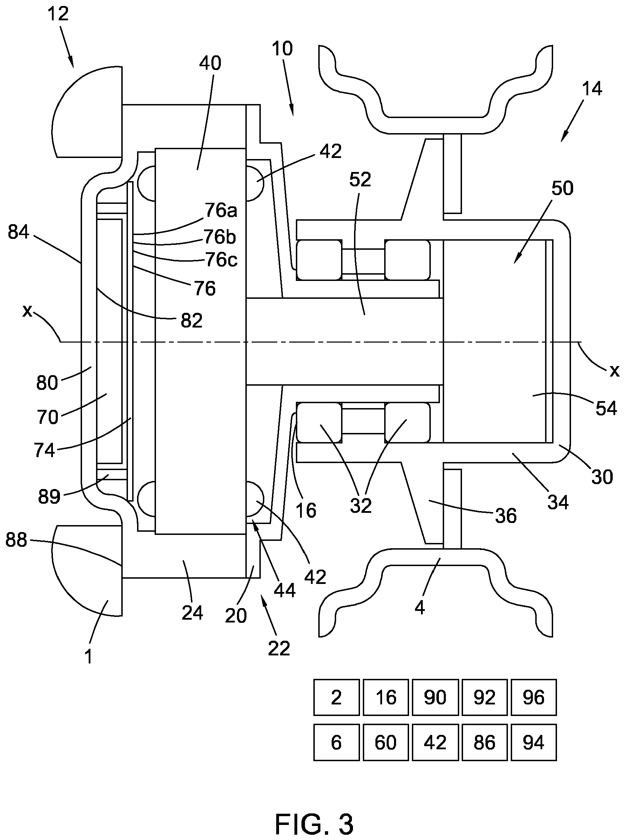

Figure 3 shows a third embodiment similar to figure 2 where the electric motor heat conductor 24 is integrated with the motor controller mounting plate 80.

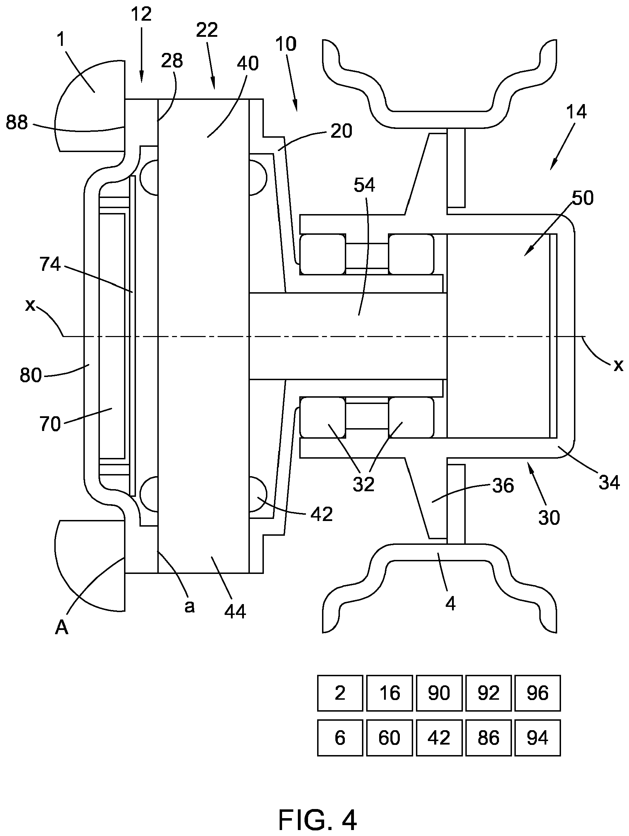

Figure 4 shows a fourth embodiment including the features of figure 1 with the additional feature that the body 20 includes the stator 44 of the electric motor 40. Therefore, the stator 44 of the electric motor 20 forms part of the outer surface of the hub 10 and comprises part of the thermal pathway for heat to pass from the motor 40 to the chassis 1.

A mounting means 22, 36 may include a mounting flange 22a, a spigot 22b or mounting holes 22c for receiving fastenings, one or more locating lugs or pins.

The hub 10 of the current invention is particularly suited to a vehicle 2 requiring a low speed high torque drive such as a specialist agricultural vehicle or one suited to hostile environments such as mining or space exploration.

The electric motor 40 may be of any type including axial or radial flux electric motors in order to carry out the invention, however, it is particularly advantageous for the electric motor to be a radial flux electric motor 40 configured having a stator 44 including coils 42 on the on the outside of the motor 40 or radially outboard i.e. distal to the central axis X. A source of electrical energy 6 may be a battery, a hydrogen fuel cell, a photovoltaic supply and/or any other source of electrical energy.

The drive means 50 shown in figure 1 includes a drive shaft 54 connected to the hub rotor 30 via a gearbox 52. It will be understood that the gearbox 52 is optional and the motor 40 may drive the hub rotor 30 directly or comprise any drive means 50 of transferring the drive from the electric motor 40 to the hub rotor 30.

Thermally connected herein is taken to mean that the interface between components is arranged to allow thermal transfer. This may be two true surfaces optimised to provide intimate contact without an air gap for example machined bare metal or having a means for assisting or augmenting thermal transfer 90 such as a thermal compound or coating 92 for improving the contact and therefore the heat transfer between the surfaces, a matt surface, a black or dark colour coating, a Peltier device 93, heat pipes 94 or a thermal transfer fluid 96 and/or another means that improves heat transfer.

Coefficient of thermal conductivity gives the rate at which thermal energy can pass through a material and is a constant k for a given material at a given temperature with the units W/(m·K). Therefore, the coefficient of thermal conductivity also affects the rate at which a material can pass thermal energy to another material. The coefficient of thermal conductivity of a component such at the motor controller mounting plate 80 can be improved by the addition of heat transfer augmentation means 90 such as heat pipes 94.

Thermally conductive material is used to define properties as a relative and absolute figure herein. The body 20 has a coefficient of thermal conductivity less than or equal to that of the motor controller mounting plate 80 to cause heat to flow away from the motor controller 70 and into the heat sink that is the chassis 2 despite the fact that the motor 40 is likely to have a higher operating temperature than the motor controller 70. Thus the material of the body 20 may be an iron or steel with a lower coefficient of thermal conductivity than the thermally conductive materials from which the motor controller mounting plate 80 is made. Thermally conductive materials include for example aluminium, magnesium, silver, gold or copper. A thermally conductive material may have a coefficient of conductivity => 88 watts/m/DegK.

The rate of thermal transfer is also affected by the surface area of a thermal connection. The greater the surface area in contact the greater the amount of thermal energy transferred. It is preferable that the heat transfer surface 88 is greater in surface area than the mounting surface 26 of the body 20.

It will be understood that the chassis 1 of the vehicle 2 includes any part of a vehicle 2 to which a hub drive 10 according to the current invention is mounted including the frame of the vehicle 2, suspension components such as a hub carrier or solid axle to which the hub drive 10 may be mounted.

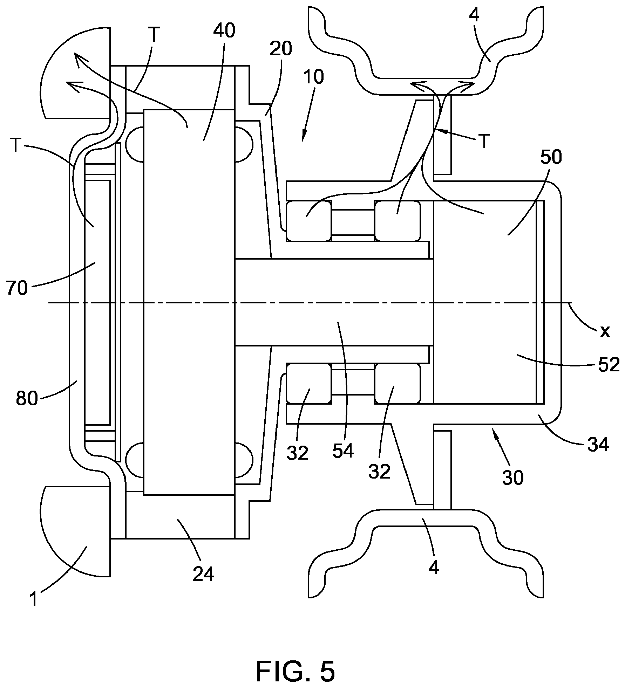

Figure 5 shows the thermal conduction pathway of the hub 10. The arrows T show the movement of the thermal energy from the heat generating components to the heat sinks provided by the chassis 2 and the wheel 4. A system such as a hub 10 installed on a chassis 1 will strive to reach a thermal equilibrium which will result in said movement of thermal energy. This is dependent on the amount of heat being generated by each component, the thermal inertia of each part and the rate at which that heat can be transferred which is controlled by geometry including cross sectional area and coefficient of conductivity. In use the hub 10 is mounted to the chassis 1 of a vehicle 2 and a road wheel 4 is mounted to the hub 10. The motor 40 is controlled by the motor controller 70. The motor 40 drives the hub rotor 30 via a drive means 50 optionally including a gearbox 52 and/or drive shaft 54. The motor 40, motor controller 70, gearbox 52 if included and bearings 32 all generate heat and are protected inside the sealed hub 10. Each has a different desired operating temperature and/or differing upper and/or lower temperature limits. It is likely that the gearbox 52 and electric motor 40 have a higher operating temperature than the motor controller 70. Common motors have an operating temperature >120degC and a motor controller 70 may have a maximum operating temperature of <50-70 degC. The heat generated in the hub 10 is removed by conduction into the chassis 1 as a first heat sink and into the road wheel 4 as a second heat sink. The motor controller mounting plate 80 has a high coefficient of thermal conductivity which works to remove thermal energy from the motor controller 70 and into the chassis 1 that acts as a heat sink. The rate at which thermal energy can be passed from the electric motor 40 to the motor controller 70 is limited by the lower coefficient of conductivity of the body 20 and/or the smaller contact area a of the mounting face 26 of the body 20 in thermal contact with the motor controller mounting plate 80 compared to the surface area A of the heat transfer surface 88 of the motor controller mounting plate 80 in thermal contact with the chassis 1.

## Claims

1. A unitary electrically driven hub (10) having an inboard end (12), an outboard end (14) and a central axis (X) comprising:
a circumferentially extending body (20) including a first mounting means (22) for connecting the hub (10) to the chassis (1) of a vehicle (2) at the inboard end (12),
a hub rotor (30) rotatably mounted to the body (20) and including a second mounting means (36) for attaching a road wheel (4) at the outboard end (14),
an electric motor (40) mounted to the body (20),
a drive means (50) for connecting the electric motor (40) to the hub rotor (30),
a motor controller (70) electrically connected to and for driving the electric motor (40) and connectable to a source of electrical energy (6),
a thermally conductive motor controller mounting plate (80) thermally connected to the motor controller (70) for transferring thermal energy away from the motor controller (70),
**characterized in that**
the motor controller mounting plate (80) has a thermal conductivity value greater than or equal to that of the body (20) and when installed is sandwiched between the first mounting means (22) and the chassis (1) for conduction of thermal energy thereto.

2. The hub (10) of claim 1, wherein the hub (10) includes one or more seals (16) for fluidly sealing the hub (10) and wherein the motor controller (70) and electric motor (40) are mounted within the hub (10).

3. The hub (10) of any preceding further including a thermal baffle (74) located between the motor controller (70) and the electric motor (40);
optionally the thermal baffle (74) including a thermal protection layer (76) comprising a reflective layer (76a), a thermally insulating layer (76b) and/or a thermally conductive layer (76c).

4. The hub (10) of claim 3 wherein the thermal baffle (74) is thermally connected to the controller mounting plate (80); and/or
wherein the thermal baffle (74) includes an Electromagnetic Compatibility (EMC) screen (78) for protecting the motor controller (70) from any electromagnetic noise created by the motor (40).

5. The hub (10) according to any preceding claim wherein the hub rotor (30) is manufactured from a thermally conductive material.

6. The hub (10) according to any preceding claim further including a heat transfer augmentation means (90) for improving heat transfer;
optionally wherein the heat transfer augmentation means (90) comprises, thermal compound (92) one or more heat pipes (94), a heat transfer fluid (96) contained within the body.

7. The hub (10) according to any preceding claim wherein the motor controller mounting plate (80) includes an inner face (82) on which the motor controller (70) is mounted and an outer face (84) wherein the outer face includes a heat transfer surface (88) for conducting heat to the chassis (1) of the vehicle (2); and optionally wherein the outer face (84) further includes cooling fins (86).

8. The hub (10) according to claim 7 wherein the heat transfer surface (88) is bare metal, is coloured black, and/or has a matt in finish, and/or includes a heat transfer compound to improve heat transfer.

9. The hub (10) according to any one of claims 7 or 8 wherein the mounting means (22) has a mounting face (26) in thermal contact with the motor controller mounting plate (80) for conducting heat from the electric motor (40) and the mounting face (26) has a smaller surface area than the heat transfer surface (88) of the motor controller mounting plate (80).

10. The hub (10) according to any preceding claim wherein the electric motor (40) is a radial flux electric motor (40) having coils (42) located radially outboard adjacent the housing for conduction of thermal energy thereto.

11. The hub (10) of any preceding claim, further comprising a circumferentially extending motor heat conductor (24) thermally connected to the electric motor (40) and in use sandwiched between the body (20) and the chassis (1).

12. The hub (10) according to any preceding claim wherein the drive means including a gearbox (52) located at the outboard end (14), and a drive shaft (54) connecting said gearbox (52) to the electric motor (40).

13. The hub of claim 12 wherein the gearbox (52) is enclosed within a thermally conductive housing (34) mounted to and rotatable with the hub rotor (30); and optionally
wherein the thermally conductive housing (34) further comprises a mounting flange (36) located, in use, between the wheel (4) and the hub rotor (30) for conducting heat from the gearbox (52) to the wheel (4).

14. The hub (10) according to any preceding claim comprising a brake (60) for restricting rotation of the hub rotor (30) wherein the brake (60) comprises a park brake; and/or
wherein a thermally conductive material is aluminium, magnesium, silver, gold or copper; and/or
wherein the body is made from iron or steel; and/or
wherein the motor controller mounting plate (80) has a thermal conductivity => 88 watts/m/DegK;

15. A vehicle (2) including the hub (10) of any of claims 1-14.

## Patentansprüche

1. Einteilige, elektrisch angetriebene Nabe (10) mit einem fahrzeugseitigen Ende (12), einem radseitigen Ende (14) und einer Mittelachse (X), umfassend:
einen sich in Umfangsrichtung erstreckenden Körper (20), der ein erstes Befestigungsmittel (22) zum Verbinden der Nabe (10) mit dem Fahrgestell (1) eines Fahrzeugs (2) an dem fahrzeugseitigen Ende (12) einschließt, einen Nabenrotor (30), der drehbar an dem Körper (20) befestigt ist und ein zweites Befestigungsmittel (36) zum Anbringen eines Rades (4) an dem radseitigen Ende (14) einschließt,
einen an dem Körper (20) befestigten Elektromotor (40),
ein Antriebsmittel (50) zum Verbinden des Elektromotors (40) mit dem Nabenrotor (30),
eine Motorsteuerung (70), die elektrisch mit dem Elektromotor (40) verbunden ist, diesen antreibt und mit einer elektrischen Energiequelle (6) verbindbar ist,
eine wärmeleitfähige Befestigungsplatte (80) der Motorsteuerung, die thermisch mit der Motorsteuerung (70) verbunden ist, um Wärmeenergie von der Motorsteuerung (70) abzuleiten;
**dadurch gekennzeichnet, dass** die Befestigungsplatte (80) der Motorsteuerung einen Wärmeleitfähigkeitswert aufweist, der größer oder gleich dem des Körpers (20) ist, und im eingebauten Zustand sandwichartig zwischen dem ersten Befestigungsmittel (22) und dem Fahrgestell (1) angeordnet ist, um Wärmeenergie dorthin zu leiten.

2. Nabe (10) nach Anspruch 1, wobei die Nabe (10) eine oder mehrere Dichtungen (16) zum fluiddichten Abdichten der Nabe (10) einschließt und wobei die Motorsteuerung (70) und der Elektromotor (40) innerhalb der Nabe (10) befestigt sind.

3. Nabe (10) nach einem der vorstehenden Ansprüche, die ferner eine zwischen der Motorsteuerung (70) und dem Elektromotor (40) angeordnete Wärmeabschirmung (74) einschließt;
optional, wobei die Wärmeabschirmung (74) eine Wärmeschutzschicht (76) einschließt, die eine reflektierende Schicht (76a), eine wärmeisolierende Schicht (76b) und/oder eine wärmeleitfähige Schicht (76c) umfasst.

4. Nabe (10) nach Anspruch 3, wobei die Wärmeabschirmung (74) thermisch mit der Befestigungsplatte (80) der Steuerung verbunden ist; und/oder
wobei die Wärmeabschirmung (74) eine Abschirmung für elektromagnetische Verträglichkeit (78) (EMV-Abschirmung) zum Schützen der Motorsteuerung (70) vor elektromagnetischen Störungen einschließt, die von dem Motor (40) erzeugt werden.

5. Nabe (10) nach einem der vorstehenden Ansprüche, wobei der Nabenrotor (30) aus einem wärmeleitfähigen Material hergestellt ist.

6. Nabe (10) nach einem der vorstehenden Ansprüche, die ferner ein Mittel zur Verstärkung der Wärmeübertragung (90) zum Verbessern der Wärmeübertragung einschließt;
optional, wobei das Mittel zur Verstärkung der Wärmeübertragung (90) eine Wärmeleitpaste (92), ein oder mehrere Wärmerohre (94) sowie eine in dem Körper enthaltene Wärmeübertragungsflüssigkeit (96) umfasst.

7. Nabe (10) nach einem der vorstehenden Ansprüche, wobei die Befestigungsplatte (80) der Motorsteuerung eine Innenseite (82), an der die Motorsteuerung (70) befestigt ist, und eine Außenseite (84) einschließt, wobei die Außenseite eine Wärmeübertragungsfläche (88) zum Ableiten von Wärme an das Fahrgestell (1) des Fahrzeugs (2) einschließt; und optional, wobei die Außenseite (84) ferner Kühlrippen (86) einschließt.

8. Nabe (10) nach Anspruch 7, wobei die Wärmeübertragungsfläche (88) blankes Metall ist, schwarz gefärbt ist und/oder ein mattes Finish aufweist und/oder eine Wärmeleitpaste zum Verbessern der Wärmeübertragung einschließt.

9. Nabe (10) nach einem der Ansprüche 7 oder 8, wobei das Befestigungsmittel (22) eine Befestigungsfläche (26) in thermischem Kontakt mit der Befestigungsplatte (80) der Motorsteuerung aufweist, um Wärme von dem Elektromotor (40) abzuleiten, und wobei die Befestigungsfläche (26) eine kleinere Oberfläche aufweist als die Wärmeübertragungsfläche (88) der Befestigungsplatte (80) der Motorsteuerung.

10. Nabe (10) nach einem der vorstehenden Ansprüche, wobei der Elektromotor (40) ein Radialfluss-Elektromotor (40) ist, mit radial außen an das Gehäuse angrenzenden Spulen (42), um Wärmeenergie an dieses abzuleiten.

11. Nabe (10) nach einem der vorstehenden Ansprüche, ferner umfassend einen sich in Umfangsrichtung erstreckenden Motorwärmeleiter (24), der thermisch mit dem Elektromotor (40) verbunden ist und im Betrieb sandwichartig zwischen dem Körper (20) und dem Fahrgestell (1) angeordnet ist.

12. Nabe (10) nach einem der vorstehenden Ansprüche, wobei das Antriebsmittel ein an dem außenseitigen Ende (14) angeordnetes Getriebe (52) und eine Antriebswelle (54) einschließt, die das Getriebe (52) mit dem Elektromotor (40) verbindet.

13. Nabe nach Anspruch 12, wobei das Getriebe (52) in einem wärmeleitfähigen Gehäuse (34) untergebracht ist, das an dem Nabenrotor (30) befestigt und mit diesem drehbar ist; und optional, wobei das wärmeleitfähige Gehäuse (34) ferner einen Befestigungsflansch (36) umfasst, der im Betrieb zwischen dem Rad (4) und dem Nabenrotor (30) angeordnet ist, um Wärme von dem Getriebe (52) zu dem Rad (4) zu leiten.

14. Nabe (10) nach einem der vorstehenden Ansprüche, umfassend eine Bremse (60) zum Begrenzen der Rotation des Nabenrotors (30), wobei die Bremse (60) eine Feststellbremse umfasst; und/oder wobei ein wärmeleitfähiges Material Aluminium, Magnesium, Silber, Gold oder Kupfer ist; und/oder
wobei der Körper aus Eisen oder Stahl besteht; und/oder
wobei die Befestigungsplatte (80) der Motorsteuerung eine Wärmeleitfähigkeit von => 88 Watt/m/DegK aufweist;

15. Fahrzeug (2), das die Nabe (10) nach einem der Ansprüche 1 bis 14 einschließt.

## Revendications

1. Moyeu (10) à entraînement électrique unitaire comportant une extrémité intérieure (12), une extrémité extérieure (14) et un axe central (X), comprenant :
un corps (20) s'étendant circonférentiellement, comprenant un premier moyen de montage (22) pour relier le moyeu (10) au châssis (1) d'un véhicule (2) au niveau de l'extrémité intérieure (12), un rotor de moyeu (30) monté de manière rotative sur le corps (20) et comportant un second moyen de montage (36) destiné à fixer une roue (4) de route à l'extrémité extérieure (14),
un moteur (40) électrique monté sur le corps (20),
un moyen d'entraînement (50) pour relier le moteur (40) électrique au rotor de moyeu (30),
un dispositif de commande de moteur (70) relié électriquement au moteur (40) électrique et destiné à l'entraîner, et pouvant être relié à une source d'énergie électrique (6),
une plaque de montage (80) thermoconductrice de dispositif de commande de moteur reliée thermiquement au dispositif de commande de moteur (70) afin de transférer l'énergie thermique à l'opposé du dispositif de commande de moteur (70),
**caractérisé en ce que** la plaque de montage (80) de dispositif de commande de moteur présente une valeur de conductivité thermique supérieure ou égale à celle du corps (20) et, une fois installée, est prise en sandwich entre le premier moyen de montage (22) et le châssis (1) pour une conduction d'énergie thermique vers celui-ci.

2. Moyeu (10) selon la revendication 1, **caractérisé en ce que** le moyeu (10) comprend un ou plusieurs joints d'étanchéité (16) pour assurer l'étanchéité fluidique du moyeu (10), et dans lequel le dispositif de commande de moteur (70) et le moteur (40) électrique sont montés à l'intérieur du moyeu (10).

3. Moyeu (10) selon l'une quelconque revendication précédente, comportant en outre un déflecteur thermique (74) situé entre le dispositif de commande de moteur (70) et le moteur (40) électrique ;
éventuellement, le déflecteur thermique (74) comprenant une couche de protection thermique (76) constituée d'une couche réfléchissante (76a), d'une couche thermo-isolante (76b) et/ou d'une couche thermoconductrice (76c).

4. Moyeu (10) selon la revendication 3, dans lequel le déflecteur thermique (74) est relié thermiquement à la plaque de montage (80) de dispositif de commande ; et/ou
dans lequel le déflecteur thermique (74) comprend un blindage de compatibilité électromagnétique (CEM) (78) pour protéger le dispositif de commande de moteur (70) contre tout bruit électromagnétique généré par le moteur (40).

5. Moyeu (10) selon l'une quelconque des revendications précédentes, dans lequel le rotor de moyeu (30) est fabriqué à partir d'un matériau thermoconducteur.

6. Moyeu (10) selon l'une quelconque des revendications précédentes, comprenant en outre un moyen d'amélioration de transfert de chaleur (90) pour améliorer le transfert de chaleur ;
éventuellement, le moyen d'amélioration de transfert de chaleur (90) comprenant un composé thermique (92), un ou plusieurs caloducs (94) et un fluide de transfert de chaleur (96) contenu dans le corps.

7. Moyeu (10) selon l'une quelconque des revendications précédentes, dans lequel la plaque de montage (80) de dispositif de commande de moteur comprend une face interne (82) sur laquelle est monté le dispositif de commande de moteur (70) et une face externe (84), la face externe comprenant une surface de transfert de chaleur (88) pour conduire de la chaleur vers le châssis (1) du véhicule (2) ; et dans lequel, éventuellement, la face externe (84) comprend en outre des ailettes de refroidissement (86).

8. Moyeu (10) selon la revendication 7, dans lequel la surface de transfert de chaleur (88) est en métal nu, est de couleur noire et/ou présente une finition mate, et/ou comprend un composé de transfert de chaleur pour améliorer le transfert de chaleur.

9. Moyeu (10) selon l'une quelconque des revendications 7 ou 8, dans lequel le moyen de montage (22) comporte une face de montage (26) en contact thermique avec la plaque de montage (80) de dispositif de commande de moteur pour conduire de la chaleur provenant du moteur (40) électrique, et la face de montage (26) présente une surface inférieure à celle de la surface de transfert de chaleur (88) de la plaque de montage (80) de dispositif de commande de moteur.

10. Moyeu (10) selon l'une quelconque des revendications précédentes, dans lequel le moteur (40) électrique est un moteur (40) électrique à flux radial comportant des bobines (42) situées radialement vers l'extérieur, à proximité du boîtier, pour la conduction d'énergie thermique vers celui-ci.

11. Moyeu (10) selon l'une quelconque des revendications précédentes, comprenant en outre un conducteur de chaleur de moteur (24) s'étendant circonférentiellement, relié thermiquement au moteur (40) électrique et, en utilisation, pris en sandwich entre le corps (20) et le châssis (1).

12. Moyeu (10) selon l'une quelconque des revendications précédentes, dans lequel le moyen d'entraînement comprend une boîte de vitesses (52) située à l'extrémité extérieure (14), et un arbre d'entraînement (54) reliant ladite boîte de vitesses (52) au moteur (40) électrique.

13. Moyeu selon la revendication 12, dans lequel la boîte de vitesses (52) est enfermée à l'intérieur d'un boîtier thermoconducteur (34) monté sur le rotor de moyeu (30) et pouvant tourner avec celui-ci ; et, éventuellement, dans lequel le boîtier thermoconducteur (34) comprend en outre une bride de montage (36) située, en utilisation, entre la roue (4) et le rotor de moyeu (30) afin de conduire de la chaleur de la boîte de vitesses (52) vers la roue (4).

14. Moyeu (10) selon l'une quelconque des revendications précédentes, comprenant un frein (60)pour restreindre la rotation du rotor de moyeu (30), dans lequel le frein (60) comprend un frein de stationnement ; et/ou dans lequel le matériau thermoconducteur est de l'aluminium, du magnésium, de l'argent, de l'or ou du cuivre ; et/ou
dans lequel le corps est constitué de fer ou d'acier ; et/ou
dans lequel la plaque de montage (80) de dispositif de commande de moteur présente une conductivité thermique => 88 watts/m/DegK ;

15. Véhicule (2) comprenant le moyeu (10) selon l'une quelconque des revendications 1 à 14.
